# DEMANDE DE BREVET EUROPEEN

(11) **EP 1 101 859 A1**
(43) Date de publication de la demande: **23.05.2001**
(21) Numéro de dépôt: 00420240.4
(22) Date de dépôt: 17.11.2000
(51) Int. Cl.: D21C 5/02, D21C 9/16, D21C 9/153, D21C 9/10

(54) **Procédé de désencrage, de décoloration, de désinfection et de blanchiment de papiers de récupération**

(30) Priorité: 18.11.1999 FR 9914516
(71) Demandeur: Papeteries Matussière et Forest, 38240 Meylan (FR)
(72) Inventeur: Floccia, Louis, 38640 Claix (FR); Defosse, Gérard, 68920 Wintzenheim (FR); Rauscher, Christian, 68140 Munster (FR); Fernandes, Jean-Carlos, 38100 Grenoble (FR)
(74) Mandataire: Maureau, Philippe

(57) **Abrégé**

Procédé consistant tout d'abord à broyer et à défibrer le mélange, à former une pâte, puis à réaliser au moins un traitement de blanchiment au peroxyde d'hydrogène en milieu oxydant. En outre, ce procédé consiste ensuite à soumettre la pâte à un traitement mixte au peroxyde d'hydrogène et à l'ozone, traitement au cours duquel les deux réactifs sont simultanément en contact avec la pâte.

## Description

La présente invention a pour objet un procédé de désencrage, de décoloration, de désinfection et de blanchiment de papiers de récupération.

Les procédés conventionnels de désencrage trouvent leur application dans le traitement de pâtes à papier de fibres courtes. Il s'agit notamment de traiter des papiers, tels que des vieux journaux, magazines, illustrés, listings d'ordinateur, formulaires en continu et éventuellement photocopies.

Ces matières premières sont essentiellement constituées de fibres courtes et de charges minérales.

De ce fait, les papiers fabriqués à partir de pâtes désencrées nécessitent presque toujours l'ajout de fibres longues chimiques et leur utilisation est limitée essentiellement à la réalisation de papier journal.

En triant les vieux papiers, ou en utilisant certains procédés de séparation, il est possible de faire des pâtes plus solides. Cependant, certaines matières de base utilisées dans de tels cas, tels que listings d'ordinateur, sont de plus en plus rares, car ils sont maintenant fréquemment réalisés à partir de papiers recyclés, c'est-à-dire ne contenant pas de fibres longues.

Le document EP-A-0 514 901 concerne un procédé de désencrage de papiers de récupération, qui consiste à partir d'un mélange de papiers dont au moins une partie contient des fibres longues, à broyer et diluer ces papiers dans l'eau, afin d'obtenir une pâte de faible concentration, de l'ordre de 1 %, à réaliser sur cette pâte une première opération de désencrage, par exemple par mise en oeuvre d'agents moussants sous un pH basique, à épaissir la pâte jusqu'à une concentration de 30 à 40 %, puis à effectuer un traitement en présence d'ozone.

Le document EP-A-0 635 598, au nom de la Demanderesse, concerne un procédé dans lequel les premières phases de traitement sont similaires à celles décrites précédemment, et dans lequel la pâte à une concentration de 30 à 40 % est introduite dans un réacteur en présence d'ozone, à pH acide, la réaction du mélange de papier en pâte avec l'ozone étant réalisée à une température de l'ordre de 30 à 40°C, à un pH de l'ordre de 3. La pâte est enfin diluée, puis passe sur un filtre laveur au niveau duquel l'encre est récupérée sous forme de grumeaux.

Le but de l'invention est de fournir un procédé de désencrage, de décoloration et de blanchiment de papiers de récupération, permettant d'obtenir une pâte possédant des propriétés physiques et mécaniques d'un excellent niveau, à partir d'un mélange traditionnel de vieux papiers, sans qu'il soit nécessaire de sélectionner des sortes de vieux papiers dont les volumes disponibles sur le marché sont très confidentiels.

Le procédé de préparation doit permettre d'utiliser des sortes de papier contenant des proportions non négligeables et supérieures à 5 % de fibres écrues ou colorées.

De façon connue en soi, les mélanges de vieux papiers sont broyés et défibrés dans des pulpeurs à basse ou moyenne concentration (de 3 à 18 %). Le mélange de pâte est alors soumis à une première phase de blanchiment consistant en l'ajout d'une quantité de peroxyde d'hydrogène comprise entre 0,1 et 1,6 %, ainsi que d'un stabilisateur de peroxyde constitué, par exemple, par du silicate de sodium. Le pH est compris, au cours de cette phase, entre 8 et 12, suivant le procédé précis mis en oeuvre qui dépend de la composition en vieux papiers.

La pâte est ramenée à une concentration de l'ordre de 1 %, après quoi il est procédé à une opération de désencrage en plusieurs étapes successives mettant en oeuvre des agents moussants sous un pH basique, cette opération de désencrage étant réalisée par flottage ou lavage.

Suivant la caractéristique essentielle de l'invention, ce procédé consiste ensuite à soumettre la pâte à un traitement mixte au peroxyde d'hydrogène et à l'ozone, traitement au cours duquel les deux réactifs sont simultanément en contact avec la pâte.

Il doit être noté que l'utilisation simultanée de peroxyde d'hydrogène et d'ozone donne de meilleurs résultats que si les deux réactifs étaient utilisés indépendamment. La présence de peroxyde et d'un second réactif, tel que l'ozone, permet de blanchir des fibres écrues. Leur présence simultanée est tout à fait conseillée, compte tenu de la forte réactivité de l'ozone sur la lignine et la cellulose. La cellulose peut ainsi être protégée du fait de cette action simultanée, car une dépolymérisation de la cellulose par l'ozone entraînerait une baisse des caractéristiques mécaniques de la pâte obtenue.

L'utilisation de cartons entraîne la présence de fibres colorées, car la fabrication de telles sortes implique l'utilisation de fibres écrues et de fibres blanchies provenant de vieux papiers, tels que les magazines, vieux journaux et déchets d'emballage. Ces fibres sont colorées par les industriels par utilisation de colorants naturels, tels que des dérivés de la lignine ou autres, ou des colorants synthétiques, tels que les éhtalocyanines, les colorants azoïques... . L'utilisation simultanée du peroxyde d'hydrogène et de l'ozone permet d'attaquer chimiquement la plupart des colorants du marché. Une démarche similaire permet de comprendre l'action de l'ozone sur les encres de type flexographie, qui sont peu éliminées lors des stades de flottation préalables. Cela se confirme dans les essais industriels par une baisse importante, dans certains cas, de la couleur résiduelle rouge de la pâte, due à la présence de résidus d'encre.

En effet, le peroxyde d'hydrogène permet de détruire les groupements carbonyles (C = O) et l'ozone détruit les groupements aromatiques et les doubles liaisons de type carbone-carbone. De plus, l'ozone permet de dégrader certains composés des encres d'imprimerie, comme les liants des encres, en dégradant, si elles sont présentes, les doubles liaisons carbone-carbone de ces molécules. Une telle opération permet une meilleure élimination de l'encre résiduelle demeurant après les premières flottations, lors d'un stage de lavage, ou de flottations ultérieures. Une partie de l'encre non éliminée dans les premiers stades de flottation peut également être dégradée par l'action oxydante de l'ozone ou du peroxyde d'hydrogène sur les structures chimiques décrites ci-dessus : carbonyle, double liaison, cycles aromatiques... .

Une autre des propriétés découlant de l'invention est l'effet sur les micro-organismes et autres matières biologiques, tels les enzymes. En effet, il est possible de noter un effet réel de désinfection sur la pâte issue de ce procédé, et ce fait peut être corrélé par plusieurs observations. Les deux principales observations étant une baisse de la flore bactérienne présente dans la pâte et dans les circuits de pâte soit donc une économie sur le coût des traitements de type biocide, et une économie de peroxyde d'hydrogène due à la neutralisation des enzymes type catalase, dégradant le peroxyde dans des réactions autres que le blanchiment lors des stades suivant le stade mixte ozone-peroxyde.

Suivant une caractéristique de l'invention, la concentration de peroxyde d'hydrogène au cours du traitement mixte est supérieure à 0,7 %, et de préférence inférieure à 3 %, par rapport au poids sec de pâte, et la concentration du second réactif au cours du traitement mixte est supérieure à 0,3 %, et de préférence inférieure à 2 %, par rapport au poids sec de pâte.

En outre, préalablement à la phase de traitement mixte, la pâte est amenée à une concentration comprise entre 20 et 45 %, et de préférence entre 30 et 40 % de siccité, la phase de traitement mixte est réalisée à un pH compris entre 6 et 12, et la phase de traitement mixte est réalisée à une température comprise entre 30° et 90°C.

Suivant une possibilité, la phase de traitement mixte au peroxyde d'hydrogène et à l'ozone est précédée par un traitement mettant en oeuvre de l'acide peroxymonosulfurique, l'acide persulfurique ou des persulfates.

La première phase de blanchiment ayant été conduite en milieu basique, cette opération permet de ramener la pâte à un état neutre ou légèrement acide.

Suivant un mode de mise en oeuvre, la phase de traitement mixte est réalisée par introduction simultanée des deux réactifs dans un mélangeur de type fluffeur contenant la pâte, puis passage de celle-ci dans une tour descendante avec une homogénéisation suivie d'une dilution en bas de la tour.

Suivant un autre mode de mise en oeuvre, la phase de traitement mixte est réalisée par passage de la pâte à l'intérieur d'un triturateur, par exemple à double arbre, où est amené le peroxyde d'hydrogène, la pâte passant immédiatement dans un mixeur où le second réactif est ajouté, le temps s'écoulant entre l'ajout des deux réactifs étant de l'ordre d'une minute.

Après la phase de traitement ozone-peroxyde, la pâte peut être alors lavée, et subir d'autres traitements, tels qu'une post-flottation et des stades de blanchiments ultérieurs.

Elle peut ainsi subir un troisième stade de blanchiment au peroxyde (P) ou avec un agent réducteur comme l'hydrosulfite de sodium (Y), le borohydrure de sodium ou l'acide formamidine sulfinique (FAS).

Avantageusement, les phases de blanchiment suivant le traitement mixte sont effectuées en alternant oxydants et réducteurs.

En fonction de la demande de la pâte et de la blancheur désirée un quatrième stade avec les mêmes réactifs cités précédemment peut être réalisé. Il conviendra alors d'alterner réducteur et oxydant.

La quantité de réactif est à ajuster en fonction de la demande de la pâte (suivi des résiduels de réactifs après réaction) et objectifs de blancheur à atteindre.

Le stade ozone-peroxyde d'hydrogène est plus efficace que deux stades pris séparément et de plus, il prépare les stades de blanchiment suivants car l'efficacité d'un stade secondaire au peroxyde est fortement favorisée par rapport à une séquence P-P.

Les séquences utilisées sont donc du type :
P - Z/P - P - P ou
P -Z/P- P - Y ou FAS ou borohydrure ou
P - Z/P - Y ou FAS ou borohydrure - P,

Quatre exemples de mise en oeuvre de ce procédé sont décrits, ci-après, à titre d'exemples non limitatifs.

### Exemple 1

On prend un mélange constitué de quantités similaires de vieux papiers issus des sortes AO et A6 (nomenclature CEPAC : Confédération Européenne des industries de pâtes PApier et Carton).

Ces vieux papiers contiennent des fibres chimiques et mécaniques blanchies ainsi qu'une proportion de fibres écrues et/ou colorées.

Ces vieux papiers sont constitués essentiellement de sortes usagées dites "post-consumer", pouvant contenir en majorité des illustrés, magazines, publicités, journaux, et caisses cartons,

Le mélange ainsi élaboré est défibré dans un pulpeur haute concentration et la concentration est ajustée à 15 %.

La température est soigneusement ajustée à la valeur maximum de 32°C. Le pH est réglé à la valeur de 11,8 par adjonction de soude et de silicate de sodium.

On introduit alors 1,5 % de peroxyde d'hydrogène (pourcentages toujours rapportés au poids sec de pâte), 0,8 % d'un savon constitué de sels d'acides gras et un complexant type DTPA à raison de 0,3 %.

Après un temps de défibrage de 20 minutes, la pâte est extraite du pulpeur et sa concentration est ajustée à 7 %. Elle est alors stockée dans une tour pendant deux heures, où a lieu la première partie du blanchiment et la préparation aux phases de désencrage.

La concentration est alors ramenée à 4 % et la pâte subit diverses étapes dites d'épuration. Ces étapes d'épuration sont des opérations où les impuretés sont éliminées par différence d'encombrement stérique (taille) ou par la force centrifuge (différence de poids).

La pâte est alors diluée à 1 %, et est flottée dans une série neuf cellules primaires et deux secondaires.

La pâte ainsi flottée est épaissie à une concentration de 38 % de siccité. Le pH est de l'ordre de 8-10.

On introduit alors dans le même mélangeur 1,5 % d'ozone et 2,5 % de peroxyde d'hydrogène.

Le mélangeur est du type fluffeur. La pâte ainsi traitée tombe dans une tour descendante avec une homogénéisation et une dilution en bas de tour. Les gaz sont extraits par une crépine située en bas de tour. Ces gaz usés sont traités afin d'éliminer l'éventuel résidu d'ozone.

Le temps de mélange-dispersion est inférieur à 2 minutes. La pâte est alors diluée en deux stades à une concentration de 1 %, est ensuite flottée dans un système identique au précédent comprenant 7 cellules primaires et deux cellules secondaires.

Elle est ensuite épurée à travers un élément combinant un système de tamisage sous pression et la force centrifuge pour éliminer les particules légères et collantes.

La pâte est ensuite épaissie à 15 % et blanchie dans une tour selon un procédé classique de blanchiment au peroxyde d'hydrogène (peroxyde : 2 %, température : 65°C, temps : 2 heures).

Voici les mesures obtenues de blancheur (R457 - fraction UV exclue) et de teinte (CIE L,a,b) :

| **Lieu prélèvement** | **Blancheur** | **L** | **a** | **b** |
|---|---|---|---|---|
| Pulpeur | 52,5 | - | - | - |
| Flottation 1 | 63,5 | 87,5 | 0,85 | 7,3 |
| Z/P | 69,1 | 89,9 | 0,48 | 6,48 |
| Flottation 2 | 69,7 | 91,1 | 0,33 | 6,64 |
| P | 74,8 | 92,1 | 0,39 | 5,5 |

### Exemple 2

Le même mélange que dans l'exemple 1 est introduit dans le pulpeur ; à savoir le mélange de sortes AO et A6 (nomenclature CEPAC).

Le mélange est trituré à une température de 30-33°C, pendant 20 minutes à un pH de 11,8, après adjonction de soude, silicate, peroxyde d'hydrogène (1 %), savon d'acides gras (0,8 %). Après trituration et dilution à 7 %, la pâte est stockée pendant deux heures permettant ainsi la réaction des produits chimiques.

La pâte est ensuite épurée, flottée et épaissie à 36-38 % selon la méthode décrite dans l'exemple 1.

Avant l'entrée au mixeur, la pâte est neutralisée par adjonction d'acide peroxymonosulfurique (acide de Caro, E° = 1,44 V). Ce dernier est synthétisé in situ dans un réacteur au Tantale. Il est à noter que des résultats similaires peuvent être obtenus par l'utilisation d'acide peroxidi-sulfurique (acide per(di-) sulfurique, H₂S₂O₈, E° = 2,12 V).

Les mêmes quantités d'ozone et de peroxyde que dans l'exemple 1 sont alors introduites au niveau du mixeur type fluffeur. Il s'ensuit une dilution en bas de tour, une seconde étape de flottation, ainsi qu'un stade de blanchiment au peroxyde d'hydrogène dans les mêmes conditions que précédemment. La blancheur initiale de la pâte était de 48,4. La blancheur finale obtenue est 73,8.

### Exemple 3

Le même mélange que dans l'exemple 1 est introduit dans le pulpeur ; à savoir le mélange de sortes AO et A6 (nomenclature CEPAC).

Le mélange est trituré à une température de 30-33°C, pendant 20 minutes à un pH de 11,8, après adjonction de soude, silicate, peroxyde d'hydrogène (1,1 %), savon d'acides gras (0,8 %).

Après trituration et dilution à 7 %, la pâte est stockée pendant deux heures permettant ainsi la réaction des produits chimiques.

La pâte est ensuite épurée, flottée et épaissie à 36-38 % selon la méthode décrite dans l'exemple 1.

La pâte est alors amenée par des vis vers un triturateur (kneader) à double arbre où elle est triturée en présence de peroxyde d'hydrogène (2 %) et sans ajout de vapeur. La pâte sort du triturateur à 60-65°C et tombe alors dans le mixeur où l'ozone est ajouté (0,9 %). Le temps entre l'ajout des deux oxydants est de l'ordre de la minute.

Il s'ensuit une dilution en bas de tour, une seconde étape de flottation, ainsi qu'un stade de blanchiment au peroxyde d'hydrogène (2,5 %). La blancheur initiale de la pâte était de 53,2. La blancheur finale obtenue est 74,2.

### Exemple 4

Le même mélange que dans l'exemple 1 est introduit dans le pulpeur ; à savoir le mélange de sortes AO et A6 (nomenclature CEPAC).

Le mélange est trituré à une température de 30-33°C, pendant 20 minutes à un pH de 11,8, après adjonction de soude, silicate, peroxyde d'hydrogène (1 %), savon d'acides gras (0,8 %). Après trituration et dilution à 7 %, la pâte est stockée pendant deux heures permettant ainsi la réaction des produits chimiques.

La pâte est ensuite épurée, flottée et épaissie à 36-38 % selon la méthode décrite dans l'exemple 1.

La même quantité d'ozone et une part réduite de peroxyde d'hydrogène (1 %) sont alors introduites au niveau du mixeur type fluffeur.

A la sortie de la tour de blanchiment, la concentration de la pâte est ajustée A 30-32 % et acheminée par des vis vers un triturateur à double arbre (kneader) où au résiduel d'ozone contenu dans la pâte est ajouté du peroxyde d'hydrogène (1 %). La pâte est lors diluée en deux étapes jusqu'à une concentration de 1 %, et on réalise une seconde étape de flottation, ainsi qu'un stade de blanchiment au peroxyde d'hydrogène. A la sortie du stade peroxyde, la pâte est blanchie sans lavage sans un stade dithionite (Y) avec une concentration de réactif de l'ordre de 0,8 %. La blancheur initiale de la pâte était de 51,6. La blancheur finale obtenue est 75,1.

## Revendications

1. Procédé de désencrage, de décoloration, de désinfection et de blanchiment de papiers de récupération, consistant tout d'abord à broyer et à défibrer le mélange, à former une pâte, puis à réaliser au moins un traitement de blanchiment au peroxyde d'hydrogène en milieu oxydant suivi d'une opération de désencrage par flottation ou lavage, caractérisé en ce qu'il consiste ensuite à soumettre la pâte à un traitement mixte au peroxyde d'hydrogène et à l'ozone, traitement au cours duquel ces deux réactifs sont simultanément en contact avec la pâte.

2. Procédé selon la revendication 1, caractérisé en ce que la concentration de peroxyde d'hydrogène au cours du traitement mixte est supérieure à 0,7 %, et de préférence inférieure à 3 %, par rapport au poids sec de pâte.

3. Procédé selon l'une des revendications 1 et 2, caractérisé en ce que la concentration du second réactif au cours du traitement mixte est supérieure à 0,3 %, et de préférence inférieure à 2 %, par rapport au poids sec de pâte.

4. Procédé selon l'une des revendications 1 à 3, caractérisé en ce que, préalablement à la phase de traitement mixte, la pâte est amenée à une concentration comprise entre 20 et 45 %, et de préférence entre 30 et 40 % de siccité.

5. Procédé selon l'une des revendications 1 à 4, caractérisé en ce que la phase de traitement mixte est réalisée à un pH compris entre 6 et 12.

6. Procédé selon l'une des revendications 1 à 5, caractérisé en ce que la phase de traitement mixte est réalisée à une température comprise entre 30° et 90°C.

7. Procédé selon l'une des revendications 1 à 6, caractérisé en ce que la phase de traitement mixte est réalisée par introduction simultanée des deux réactifs dans un mélangeur de type fluffeur contenant la pâte, puis passage de celle-ci dans une tour descendante avec une homogénéisation suivie d'une dilution en bas de la tour.

8. Procédé selon l'une des revendications 1 à 6, caractérisé en ce que la phase de traitement mixte est réalisée par passage de la pâte à l'intérieur d'un triturateur, par exemple à double arbre, où est amené le peroxyde d'hydrogène, la pâte passant immédiatement dans un mixeur où le second réactif est ajouté, le temps s'écoulant entre l'ajout des deux réactifs étant de l'ordre d'une minute.

9. Procédé selon l'une des revendications 1 à 8, caractérisé en ce que la phase de traitement mixte est suivie par une ou plusieurs phases de blanchiment au peroxyde d'hydrogène, à l'hydrosulfite de sodium, l'acide formamidine sulfinique, ou au borohydrure de sodium.

10. Procédé selon la revendication 9, caractérisé en ce que les phases de blanchiment suivant le traitement mixte sont effectuées en alternant oxydants et réducteurs.

11. Procédé selon l'une des revendications 1 à 10, caractérisé en ce que la phase de traitement mixte au peroxyde d'hydrogène et à l'ozone est précédée par un traitement mettant en oeuvre de l'acide peroxymonosulfurique, l'acide persulfurique ou des persulfates.
